# FASCICULE DE BREVET EUROPEEN

(11) **EP 0 761 619 B1**
(45) Date de publication et mention de la délivrance du brevet: **29.10.2003**
(21) Numéro de dépôt: 96401742.0
(22) Date de dépôt: 07.08.1996
(51) Int. Cl.: C03C 25/10, C07F 7/18

(54) **Fils de verre de renforcement et composites résistant en milieu corrosif**
Verstärkungsglasfasern und in korrosiver Umgebung beständige Verbundwerkstoffe
Reinforcing glass fibres and in a corrosive environment resistant composites

(30) Priorité: 01.09.1995 FR 9510316
(43) Date de publication de la demande: 12.03.1997
(73) Titulaire: Saint-Gobain Vetrotex France, 73000 Chambéry (FR)
(72) Inventeur: Augier, Eric, 73000 Barberaz (FR); Arpin, Michel, 73290 La Motte Servolex (FR); Muller, Didier, 73490 La Ravoire (FR)
(74) Mandataire: Goldenberg, Virginie Isabelle

(56) Documents cités:
- EP-A- 0 450 105
- EP-A- 0 451 665
- FR-A- 2 272 100
- FR-A- 2 278 699
- FR-A- 2 320 914
- GB-A- 1 290 528
- CHEMICAL ABSTRACTS, vol. 121, no. 2, 11 Juillet 1994 Columbus, Ohio, US; abstract no. 10972, XP002005218 & JP 06 025 973 A (HITACHI CHEMICAL CO LTD) 1 Février 1994
- CHEMICAL ABSTRACTS, vol. 112, no. 14, 2 Avril 1990 Columbus, Ohio, US; abstract no. 120085, XP002005219 & JP 01 238 592 A (ASAHI-SCHWEBEL CO LTD) 22 Septembre 1989
- CHEMICAL ABSTRACTS, vol. 124, no. 8, 19 Février 1996 Columbus, Ohio, US; abstract no. 88598, XP002005220 & POLLIMO, vol. 19, no. 5, 1995, SEOUL KR, pages 593-605, JANG, JYONG-SIK ET AL:
- CHEMICAL ABSTRACTS, vol. 86, no. 24, 13 Juin 1977 Columbus, Ohio, US; abstract no. 172457, XP002005221 & JP 52 014 649 A (YOSHIZAKI ) 3 Février 1977
- CHEMICAL ABSTRACTS, vol. 112, no. 10, 5 Mars 1990 Columbus, Ohio, US; abstract no. 79618, XP002005222 & JP 01 197 568 A (CHISSO CORP) 9 Août 1989
- MAKROMOLEKULARE CHEMIE, MACROMOLECULAR SYMPOSIA, vol. 70/71, 1 Mai 1993, pages 459-472, XP000381621 SCHERBAKOFF N ET AL:
- CLAYTON A. MAY AND Y. TANAKA: "EPOXY RESINS chemistry and technology", , MARCEL DEKKER, INC., NEWYORK

## Description

La présente invention concerne des fils (ou « fibres ») de verre destinés au renforcement de matières organiques et/ou inorganiques, lesdits fils et/ou lesdites matières étant susceptibles d'être utilisés en milieu corrosif (humidité, milieu salé NaCI, milieu acide ou basique). La présente invention concerne également la composition employée pour revêtir les fils et les produits renforcés (ou « composites ») obtenus à partir des fils.

Il est connu d'utiliser des fils de verre pour renforcer des matières organiques et/ou inorganiques depuis longtemps. Les fils les plus couramment employés sont les fils de verre E présentant une composition dérivée de la composition eutectique du système SiO₂-Al₂O₃-CaO à 1170°C. Ces fils sont habituellement revêtus, pendant leur fabrication, d'une composition d'ensimage destinée notamment à protéger les fils de l'abrasion et à favoriser l'adhésion entre le verre et la matière que ces fils visent à renforcer (une bonne adhésion contribuant notamment à l'obtention de composites présentant de bonnes propriétés mécaniques). Les fils de verre E ainsi ensimés sont particulièrement aptes à être associés à des matières organiques, thermoplastiques ou thermodurcissables, pour la réalisation de composites présentant de bonnes propriétés mécaniques. Cependant, dans certains milieux corrosifs (par exemple, lorsque ces fils sont directement - c'est-à-dire sans être protégés par une matière organique - associés à une matière basique telle que le ciment ou lorsque les composites réalisés à partir de ces fils sont soumis à de fortes contraintes mécaniques dans certains milieux corrosifs, notamment dans le ciment ou dans des installations en contact permanent avec l'eau, le sel ou l'acide...), ces fils sont dégradés, leurs propriétés mécaniques amoindries, ce qui entraîne une diminution de leur effet de renforcement au cours du temps.

On a tenté de résoudre ce problème de différentes manières. Il est notamment connu de modifier la composition du verre constitutif des fils en vue d'améliorer la résistance chimique de ces fils à l'égard d'un milieu très basique. La composition de ces verres, dits alcali-résistants, contient généralement une proportion importante d'oxyde de zirconium et est, par exemple, du type Na₂O-ZrO₂-SiO₂. Une composition classique de ces verres est notamment donnée dans le brevet GB 1 290 528.

Toutefois, si ces verres sont moins attaqués en milieu basique que le verre E, leur dégradation n'est que ralentie et la diminution de leurs propriétés mécaniques peut être significative dans certaines conditions. Par ailleurs, l'utilisation de tels fils reste actuellement limitée au renforcement direct du ciment, ces fils, même revêtus d'ensimages courants tels que ceux utilisés pour améliorer l'adhésion des fils de verre E aux matières organiques, adhérant plus faiblement aux matières organiques que les fils de verre E et présentant de ce fait un intérêt plus limité dans le renforcement de ces dernières matières. De tels fils, même revêtus d'ensimages traditionnels tels que ceux utilisés pour revêtir des fils de verre E afin de les rendre aptes au tissage, peuvent en outre difficilement être tissés.

Il est également connu de revêtir des fils de verre destinés au renforcement du ciment d'un apprêt dont la composition a pour but de préserver la surface des fils de l'attaque du ciment. Là encore, de nombreuses formules ont été proposées, comme le revêtement des fils par une résine furanique, mais la plupart d'entre elles ne confèrent qu'une protection très temporaire.

D'autres solutions (telles que l'ajout d'agents réduisant la basicité des milieux dans lesquels se trouvent les fils) ne concernent que des applications spécifiques et sont donc de portée très limitée. Il est également connu d'utiliser d'autres renforts (fils de carbone, etc...) pour réaliser des composites résistant en milieu corrosif mais le coût de tels renforts reste élevé par rapport à celui des fils de verre et leur application reste limitée.

Il est connu du document JP 52 014 649-A- des fibres de verre traitées par un aminosilane en vue de former des feuilles ou des bouteilles à base de polymère (meth)acrylonitrile afin d'améliorer la résistance aux chocs de ces articles.

Il est également connu du document FR 2 320 914-A- de revêtir des bouteilles en verre par un revêtement formé de deux couches : une première couche de primaire comprenant un silane, une résine époxy et un durcisseur et une deuxième couche d'un copolymère, en vue de permettre la réutilisation de ces bouteilles après une stérilisation pour une solution d'agent caustique chaud.

La présente invention remédie aux inconvénients précédemment cités. Elle propose des fils de verre dont l'effet de renforcement est plus important et/ou mieux conservé au cours du temps dans au moins un des milieux corrosifs suivants : milieu humide, milieu salé NaCI, milieu acide, milieu basique. Elle propose notamment des fils de verre pouvant être associés avantageusement à des matières organiques et/ou inorganiques afin d'obtenir des composites présentant une ou des propriétés mécaniques améliorées avant et après vieillissement, pendant au moins une certaine période, dans au moins un des milieux corrosifs suivants : milieu humide, milieu salé NaCI, milieu acide, milieu basique et/ou des fils de verre dont la dégradation dans au moins un des milieux corrosifs précédents est plus fortement ralentie (chute moins rapide des propriétés mécaniques des composites obtenus à partir des fils).

Les fils de verre selon l'invention sont revêtus d'une composition d'ensimage comprenant au moins un silane répondant à la formule suivante :

Si (R₁) (R₂) (R₃) (R₄)

dans laquelle :
- R₁, R₂ sont des groupements alcoxy,
- R₃ est un groupement alcoxy ou un radical à base uniquement de carbone, d'hydrogène et éventuellement d'azote,
- R₄ est un radical à base uniquement de carbone, d'hydrogène et éventuellement d'azote, comprenant au moins un cycle insaturé substitué par au moins une chaîne insaturée conjuguée avec le cycle,
le taux de silane(s) répondant à la formule précédente étant compris entre 0,5 et 20% en poids de l'extrait de la composition d'ensimage.

Par « composition comprenant ... », on entend « composition dont un des constituants initiaux est ... », indépendamment de l'évolution de ce constituant au sein de la composition. De même, par « fils de verre revêtus de ... », on entend « fils de verre qui ont été revêtus de ... », indépendamment du devenir du revêtement après les traitements habituels subis par les fils de verre, notamment après les opérations de séchage et/ou de polymérisation.

Les fils de verre selon l'invention sont préparés selon des procédés connus en soi. De façon générale, la fabrication des fils de verre selon l'invention se fait de la façon suivante : des filets de verre fondu sont étirés mécaniquement sous la forme d'une ou plusieurs nappes de filaments continus à partir des orifices d'une ou l'invention avant d'être rassemblés en un ou plusieurs fils. Ces fils peuvent ensuite être bobinés sur des supports en rotation avant de subir d'autres opérations (extraction en vue d'une coupe indirecte, tissage...), être répartis sur des convoyeurs en mouvement ou encore être coupés après formation par l'organe servant à les étirer (coupe directe sous filière). La présentation des fils varie ainsi en fonction de l'application envisagée. Les fils de verre selon l'invention peuvent notamment se présenter sous forme d'enroulements de fils continus (stratifils, gâteaux, cops...), sous forme de fils coupés, de mats (nappes de fils continus entremêlés), de tresses, de rubans, de réseaux, etc... ces différents fils étant généralement composés de filaments de diamètre compris entre 5 et 24 µm.

Les fils de verre selon l'invention peuvent être obtenus à partir de tout type de verre habituellement utilisé pour la réalisation de fils de verre de renforcement. Les fils selon l'invention peuvent être notamment des fils de verre E, des fils de verre du type dit « R » (résistant mécaniquement) ou « S » à base de silice, d'alumine, de magnésie et éventuellement de chaux, des fils de verre alcali-résistant, etc... Dans le cas, notamment, où les fils de verre selon l'invention sont des fils de verre E, ils sont préférentiellement obtenus à partir d'un verre comprenant principalement les composants suivants, dans les proportions exprimées en pourcentages pondéraux : 52-58 % SiO₂ ; 12-16 % Al₂O₃ ; 16-25 % CaO ; 4-13 % B₂O₃ ; 0-6 % MgO ; 0-2 % d'oxydes alcalins (essentiellement Na₂O et/ou K₂O) ; ce verre peut également comprendre d'autres composants tels que du fluor, TiO₂, CuO, BaO, ZnO, ZrO₂, LiO₂, SO₃ ... dans des proportions n'excédant pas 1 % pour chacun des composants. D'autres verres également susceptibles d'être utilisés pour réaliser des fils de renforcement mais moins fréquemment employés dans cette application peuvent aussi être mentionnés, notamment des verres résistant chimiquement de composition principale suivante, en pourcentages pondéraux : 57-59 % SiO₂ ; 11-13 % Al₂O₃ ; 20-22 % CaO ; 2-5 % MgO ; 0-0,5 % B₂O₃ ; 2-3 % TiO₂ ; 0-3 % ZnO ; 0,9-1 % Na₂O et/ou K₂O ; ou des verres résistant en milieu acide de composition principale suivante, en pourcentages pondéraux : 60-66 % SiO₂ ; 2-6 % Al₂O₃ ; 14-15 % CaO ; 1-3 % MgO ; 2-7 % B₂O₃ ; 7-10 % Na₂O et/ou K₂O ; 0-0,4 % Fe₂O₃.

De préférence, les fils de verre selon l'invention sont des fils de verre dit « alcali-résistant », ce verre renfermant généralement de l'oxyde de zirconium ZrO₂. Ces fils peuvent être choisis parmi tous les fils de verre « alcali-résistant » existants (tels que ceux décrits dans les brevets GB 1 290 528, US 4 345 037, US 4 036 654, US 4 014 705, US 3 859 106, etc...) et comprennent, de préférence, au moins 5 % en moles de ZrO₂. Selon un mode de réalisation de l'invention, le verre constitutif des fils comprend SiO₂, ZrO₂ et au moins un oxyde alcalin, de préférence Na₂O, comme principaux constituants.

Une composition de verre alcali-résistant particulièrement utilisée pour réaliser les fils de verre selon l'invention est la composition décrite dans le brevet GB 1 290 528, composée principalement des composants suivants dans les proportions exprimées en pourcentages molaires : 62-75 % SiO₂ ; 7-11 % ZrO₂ ; 13-21 % R₂O ; 1-10 % R'O ; 0-4 % Al₂O₃ ; 0-6 % B₂O₃ ; 0-5 % Fe₂O₃ ; 0-2 % CaF₂ ; 0-4 % TiO₂ ; R₂O représentant un ou des oxyde(s) alcalin(s), de préférence Na₂O et, éventuellement (jusqu'à 2 %) Li₂O, et R'O étant un ou des composants choisis parmi les oxydes alcalino-terreux, ZnO et MnO. Les fils de verre alcali-résistant selon l'invention répondent de manière particulièrement avantageuse aux objectifs de l'invention, comme explicité ultérieurement.

La composition d'ensimage revêtant les fils selon l'invention peut être une composition aqueuse, anhydre ou peut comprendre, par exemple, moins de 5 % en poids de composés jouant uniquement un rôle de solvant. Dans la plupart des cas, la composition selon l'invention est une composition aqueuse comprenant entre 70 et 98 % en poids d'eau et se présentant sous forme d'une dispersion aqueuse (émulsion, suspension, mélange d'émulsion(s) et/ou de suspension(s)) ou d'une solution.

Comme indiqué dans la définition de l'invention, la composition comprend au moins un silane particulier choisi parmi un ensemble limité de silanes répondant à la définition précédemment donnée. L'utilisation, pour renforcer des matières organiques et/ou inorganiques, de fils de verre revêtus d'une composition d'ensimage comprenant un ou plusieurs de ces silanes selon l'invention permet d'obtenir des composites présentant une ou des propriétés mécaniques améliorées avant et, pendant au moins un certain temps, après vieillissement, dans au moins un des milieux corrosifs suivants : milieu humide, salé NaCI, acide, basique et/ou permet d'obtenir des composites dont les propriétés mécaniques sont mieux conservées au cours du temps (chute moins rapide des propriétés mécaniques), l'amélioration observée étant fonction du type de fils de verre revêtus, de la matière renforcée et du milieu corrosif considéré.

Par « propriétés mécaniques améliorées » on entend toujours dans le présent texte, des propriétés mécaniques améliorées par rapport à celles obtenues avec les mêmes fils mais non revêtus de l'ensimage selon l'invention, notamment les mêmes fils revêtus d'un ensimage courant comprenant comme silane un silane autre que celui défini selon l'invention.

De façon particulièrement intéressante, dans le cas où les fils de verre selon l'invention sont des fils de verre alcali-résistant, la liaison de ces fils avec des matières organiques, notamment les matières thermodurcissables est, semble-t-il, grandement favorisée, les composites obtenus à partir de ces fils et d'une matière organique présentant de meilleures propriétés mécaniques avant et, pendant au moins un certain temps, après vieillissement en milieu corrosif, quel que soit ce milieu, que les composites obtenus à partir de la même matière organique et de fils de verre alcali-résistant courants non revêtus de l'ensimage selon l'invention, notamment de fils de verre alcali-résistant revêtus d'ensimages comprenant comme silane un silane différent de celui selon l'invention. Les fils de verre alcali-résistant revêtus de l'ensimage selon l'invention peuvent ainsi être utilisés avantageusement, non seulement pour le renforcement direct de matières inorganiques corrosives, par exemple de matières basiques telles que le ciment, mais également et de façon encore plus surprenante et avantageuse pour le renforcement de matières organiques destinées ou non à être soumises à des contraintes importantes en milieu corrosif (par exemple dans le ciment).

On remarque également que les fils de verre alcali-résistant revêtus de la composition selon l'invention sont aptes au tissage, ce qui permet leur utilisation dans des applications telles que la réalisation de grilles pour façade, ces grilles étant jusqu'à présent réalisées en fils de verre E recouverts d'un matériau de protection (généralement sous forme d'une émulsion concentrée de plusieurs polymères filmogènes de type butadiène, polychlorure de vinyle, acrylique...). L'utilisation, dans une telle application, de fils de verre alcali-résistant, déjà plus aptes à l'origine que les fils de verre E à renforcer directement des matières basiques telles que le ciment et ne nécessitant pas de ce fait d'être protégés dans ce genre d'application par une matière organique, permet ainsi d'éviter l'emploi du matériau supplémentaire de protection.

Les composites obtenus à partir d'une matière organique notamment et d'autres fils de verre revêtus de l'ensimage selon l'invention - tels que les fils de verre R ou E selon l'invention - présentent également des propriétés mécaniques améliorées avant et, pendant au moins un certain temps, après vieillissement, dans au moins certains milieux corrosifs, l'amélioration étant cependant moins importante dans de nombreux cas que l'amélioration observée avec les fils de verre alcali-résistant selon l'invention. Notamment, l'utilisation des fils de verre E selon l'invention pour réaliser des composites n'entraîne pas d'amélioration au niveau des propriétés mécaniques des composites obtenus lorsque ces composites sont soumis à des contraintes importantes en milieu acide. De la même manière, l'utilisation des fils de verre E selon l'invention en milieu basique n'entraîne pas d'amélioration significative au niveau des propriétés mécaniques des composites réalisés. Par ailleurs, en milieu humide et/ou salé NaCI, l'amélioration des propriétés mécaniques des composites après vieillissement s'observe sur une période de temps beaucoup moins longue dans le cas des fils de verre R selon l'invention que dans le cas des fils de verre alcali-résistant selon l'invention. Les fils de verre R ou E selon l'invention permettent cependant l'obtention de composites dont les propriétés mécaniques sont malgré tout particulièrement élevées du fait de la bonne adhésion à l'origine des fils de verre R ou E et des matières organiques.

De préférence, le groupement R₄ du silane mentionné dans la définition de l'invention répond à la formule suivante :

R₅ φ R₆

dans laquelle :
- φ est un cycle insaturé, ce cycle étant de préférence un cycle benzénique, et ce cycle étant de préférence un isomère para,
- R₆ est une chaîne insaturée conjuguée avec le cycle.

De préférence, R₆ = -(CH=CH)ₘ-H, m étant un entier compris entre 1 et 4 pour des raisons d'encombrement stérique notamment. De façon particulièrement préférée, m = 1 ou éventuellement 2,
- R₅ est une chaîne aliphatique comprenant des groupements alkyl(s) et éventuellement amine(s) (ce ou ces groupements amines pouvant contribuer à certains couplages avec les autres composants de l'ensimage et/ou avec les matières renforcées), le nombre d'atomes dans la chaîne principale étant compris entre 4 et 20 pour des raisons d'encombrement stérique notamment. Cette chaîne peut éventuellement être ramifiée et présenter des insaturations notamment sur ses ramifications. De préférence, cette chaîne aliphatique comprend des groupements alkyl(s) et des groupement(s) amine(s). Avantageusement cependant, elle comprend au moins 4 carbones et reste majoritairement composée de groupements alkyls (par exemple et avantageusement, cette chaîne comprend au moins 3 fois plus de groupements alkyls que de groupements amines) ; elle consiste préférentiellement en une succession de groupements répondant à la formule suivante : -(CH₂)ₙ-NH-, n étant un entier variable selon les groupements et étant avantageusement inférieur à 4 , et est terminée en chacune de ses extrémités par un groupement alkyl. Par exemple R₅ = -(CH₂)ₙ-NH-(CH₂)ₙ-NH-(CH₂)_{n"}- avec n, n' et n" ≤ 4.

Le groupement R₃ du silane mentionné dans la définition de l'invention peut être un groupement du type R₄ ou R₅ ou un groupement alkoxy et est de préférence un groupement alcoxy. Les groupements alcoxy du silane selon l'invention sont de préférence choisis parmi les groupements éthoxy et les groupements méthoxy.

Selon le mode de réalisation préféré de la présente invention, la composition d'ensimage utilisée selon l'invention comprend au moins un silane tel que défini précédemment dans lequel :
R₁ = R₂ = R₃ = -CH₃O ; 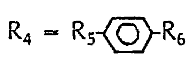 avec R₅ = -(CH₂)₃-NH-(CH₂)₂-NH-CH₂- et R₆ = -CH=CH₂, c'est-à-dire un 1, vinyl benzyl - 4, méthyl amino - éthylamino propyl triméthoxy silane.

Le taux de silane(s) répondant à la définition de l'invention au sein de la composition d'ensimage selon l'invention est généralement compris entre 0,5 et 20 % en poids, préférentiellement entre 2 et 15 % en poids et de façon particulièrement préférée entre 4-5 et 13 % en poids de l'extrait sec de la composition, l'amélioration des propriétés mécaniques observée sur les composites augmentant généralement avec ce taux (excepté dans le cas des fils de verre E utilisés en milieu acide comme illustré ultérieurement). En dessous de 0,5 % en poids de silane(s) selon l'invention, l'amélioration des propriétés mécaniques est peu significative ; en dessous de 2 % en poids, cette amélioration est généralement peu importante et au dessus de 15 % en poids de silane(s) selon l'invention, le coût de l'ensimage devient très important sans amélioration supplémentaire des propriétés, voire, dans certains cas, au dessus de 20 %, avec une chute cette fois desdites propriétés.

Outre au moins un silane tel que précédemment mentionné, la composition d'ensimage revêtant les fils selon l'invention peut comprendre un ou plusieurs autres silanes jouant généralement le rôle d'agents de couplage, notamment un ou des silanes couramment utilisés dans les ensimages tels que le gamma méthacryloxypropyltriméthoxy silane, le gamma glycidoxypropyltriméthoxy silane, etc..., ce ou ces silanes pouvant contribuer au couplage entre les fils de verre et la matière renforcée. Dans ce cas là, le taux du ou des silanes autres que le silane défini selon l'invention est généralement inférieur à 12 % en poids et de préférence inférieur à 5 % en poids de l'extrait sec de la composition selon l'invention, le taux maximal de silane(s), tous silanes confondus, n'excédant pas 25 % en poids de l'extrait sec de la composition selon l'invention. La composition d'ensimage peut également comprendre d'autres agents de couplage tels que des titanates, zirconates, etc... ou des composés organiques facilitant le couplage des fils de verre à certaines matières organiques.

Selon un mode de réalisation préféré de la présente invention, la composition revêtant les fils comprend, en plus du ou des silane(s) selon l'invention, au moins un agent collant, c'est-à-dire un agent assurant normalement la liaison des filaments entre eux (intégrité) au sein des fils, sous forme d'un composé à fonction(s) époxy, de préférence un polymère à fonctions au moins partiellement polymérisées présentant au moins une fonction epoxy, ce « prépolymère » étant par exemple un dérivé diépoxydé du bisphénol A ou F, une résine époxyphénol novolaque ou époxycrésol novolaque, un phénylglycidyl éther, un triglycidyl éther du para aminophénol, un cyclohexane diméthanol diglycidyl éther, etc... L'utilisation combinée d'au moins un silane tel que défini selon l'invention et d'au moins un agent collant présentant au moins une fonction époxy dans la composition revêtant les fils selon l'invention permet d'obtenir des résultats encore améliorés et étonnamment élevés en matière de propriétés mécaniques, avant et, pendant au moins un certain temps, après vieillissement en milieu corrosif, pour les composites obtenus à partir de ces fils et d'une matière organique et/ou inorganique, et permet d'obtenir des propriétés particulièrement importantes de résistance à la corrosion (perte beaucoup moins rapide de propriétés mécaniques au cours du temps en milieu corrosif) pour ces composites ou pour les fils, notamment une résistance à la corrosion plus importante que lorsqu'on utilise une composition comprenant, à des taux équivalents, uniquement l'un de ces constituants (effet synergique).

La composition peut également comprendre un ou plusieurs autres agents collants, par exemple un agent collant à fonction(s) polyester tel que le polyacétate de vinyle, en plus ou au lieu de l'agent ou des agents collants à fonction(s) époxy, ce dernier mode de réalisation étant cependant moins avantageux que le mode utilisant un agent collant à fonction(s) époxy, comme illustré ultérieurement. Le taux d'agent(s) collant(s) est préférentiellement compris entre 0 et 85 % en poids et généralement entre 50 et 75 % en poids de l'extrait sec de la composition, 85 % au moins de ces agents collants étant de préférence des agents collants à fonction(s) époxy tels que mentionnés précédemment.

Selon un mode de réalisation avantageux de la présente invention, principalement dans le cas où les fils sont destinés à renforcer directement une matière basique telle que le ciment, la composition comprend, outre au moins un silane tel que précédemment défini et éventuellement au moins un agent collant à fonction(s) époxy, au moins un acide phosphonique ou dérivé d'acide phosphonique. Cet acide ou dérivé d'acide phosphonique peut être par exemple l'hexaméthylène diamine tétraméthyle phosphonate de potassium, le diéthylène triamine pentaméthylène phosphonate de potassium, l'acide butane phosphonique tricarboxylique, le butane phosphotricarboxylate de sodium, l'acide hydroxy éthane diphosphonique, l'hydroxy éthane diphosphonate de sodium, etc... L'utilisation, pour revêtir les fils de verre, d'une composition comprenant au moins un silane défini selon l'invention combiné à au moins un acide ou dérivé d'acide phosphonique, permet d'obtenir, pour les fils ou composites obtenus à partir des fils selon l'invention, des propriétés importantes de résistance à la corrosion notamment lorsque les fils de verre sont associés directement à une matière inorganique basique telle que le ciment. L'utilisation combinée d'au moins un silane tel que défini selon l'invention, d'au moins un acide ou dérivé d'acide phosphonique et d'au moins un agent collant à fonction(s) époxy dans la composition revêtant les fils selon l'invention permet d'obtenir des fils présentant une résistance surprenante au vieillissement dans certains milieux corrosifs au moins, tels que le milieu basique, notamment une résistance à la corrosion plus importante que lorsqu'on utilise une composition comprenant, à des taux équivalents, uniquement l'un ou deux de ces constituants. Cet effet synergique se remarque notamment lorsque les fils de verre sont associés directement à une matière inorganique basique telle que le ciment.

Le taux d'acide phosphonique est généralement compris entre 0 et 40 % en poids de l'extrait sec de la composition et avantageusement, surtout lorsque les fils de verre sont destinés à être associés directement à une matière inorganique basique telle que le ciment, entre 10 et 40 % en poids de l'extrait sec de la composition.

Outre les composants précédemment mentionnés, la composition revêtant les fils selon l'invention peut également comprendre d'autres composants, notamment des composants couramment utilisés dans les compositions d'ensimage tels que des agents lubrifiants, ou encore des agents filmogènes, des agents textiles, des agents antistatiques, des agents émulsifiants, des agents tensioactifs, des agents mouillants, etc... la proportion de ces agents étant préférentiellement inférieure à 30 % en poids de l'extrait sec de la composition. Dans la plupart des cas, la composition comprend au moins un agent lubrifiant, par exemple un ester d'acide gras ou un dérivé d'alcool gras, la proportion d'agent lubrifiant étant de préférence d'au moins 5% en poids de l'extrait sec de la composition.

La composition revêtant les fils selon l'invention peut être obtenue en mélangeant directement tous les composants ou en'ajoutant les composants en plusieurs étapes. Généralement le silane selon l'invention est ajouté à la composition sous forme hydrolysée. Après mélange des composés actifs, un solvant, notamment l'eau, peut être ajouté au mélange afin d'obtenir la composition et les proportions désirées.

Dans les cas où la composition d'ensimage revêtant les fils selon l'invention se présente sous forme d'une dispersion aqueuse, l'extrait sec de la composition est généralement compris entre 2 et 30 % en poids de la composition.

La composition est généralement déposée en une étape sur les filaments avant leur rassemblement en fils comme explicité précédemment. Cependant, les composants de la composition revêtant les fils peuvent être déposés en plusieurs étapes ; par exemple, le silane défini selon l'invention peut être déposé, sous forme hydrolysée, indépendamment des autres constituants de la composition, de préférence avant le dépôt de ces autres constituants, pour que le silane soit mis directement au contact du verre constituant les fils.

La perte au feu des fils selon l'invention est préférentiellement comprise entre 0,2 et 4 % en poids des fils et, de préférence, entre 0,3 et 2 % en poids des fils. Ces fils permettent de renforcer efficacement des matières organiques et/ou inorganiques et permettent d'obtenir des composites présentant des propriétés mécaniques améliorées en milieu corrosif comme explicité précédemment.

Les composites obtenus à partir des fils selon l'invention comprennent au moins une matière organique et/ou au moins une matière inorganique et des fils de verre, une partie au moins des fils étant les fils de verre selon l'invention. Les fils de verre selon l'invention sont préférentiellement associés à des matières thermodurcissables (vinylesters, polyesters, phénoliques, époxydes, acryliques, ...), avantageusement à des vinylesters plus résistants à la corrosion que d'autres matières organiques et/ou à des matières cimentaires (ciment, béton, mortier, gypse, composés formés par réaction de chaux, de silice et d'eau, ...), le renforcement des matières cimentaires pouvant se faire directement ou indirectement (association préalable avec une matière organique avant ajout au ciment).

Les exemples suivants non limitatifs illustrent les fils de verre selon l'invention et permettent de comparer les propriétés mécaniques obtenues avant et après vieillissement pour des composites réalisés à partir de fils de verre selon l'invention avec les propriétés mécaniques obtenues pour des composites réalisés à partir de fils de verre traditionnels.

### EXEMPLE COMPARATIF 1

Dans cet exemple, des filaments de verre de 14 µm de diamètre sont obtenus par étirage de filets de verre fondu, ce verre étant un verre alcali-résistant de composition suivante exprimée en pourcentages pondéraux :

| | |
|---|---|
| SiO₂ | 61,6 % |
| Al₂O₃ | 0,9 % |
| ZrO₂ | 16,8 % |
| CaO | 5,4 % |
| Na₂O | 14, 7 % |
| K₂O | 0,3 % |
| Fe₂O₃ | 0,05 % |
| Fluor | 0,26 % |
| TiO₂ | 0,1 % |
| SO₃ | 0,05 % |

Ces filaments sont revêtus, pendant leur trajet avant rassemblement en fils, d'une composition d'ensimage comprenant 1 % en poids d'agent lubrifiant à base de nonyl phénol éthoxylé (commercialisé sous la référence « IGEPAL C0 880 » par la société GAF), 0,15 % en poids de gamma méthacryloxypropyltriméthoxy silane (commercialisé sous la référence « Silquest A 174 » par la société OSi), le complément étant de l'eau. Les fils obtenus par rassemblement des filaments et dont la masse linéique (« titre ») est de 300 g/km (tex) sont bobinés sous forme de gâteaux puis séchés par air chaud à 130°C. Ces fils sont ensuite extraits des enroulements pour réaliser des plaques à fils parallèles conformément à la norme NF 57-152. La résine renforcée est la résine polyester M 402 commercialisée sous cette référence par la société CRAY-VALLEY, à laquelle on ajoute, pour 100 parts en poids de résine polyester, 15 parts d'un assouplisseur commercialisé sous la référence « F 8010 C » par la société CRAY-VALLEY, 16,5 parts de styrène et 1,5 parts d'un accélérateur commercialisé sous la référence « THM 60 » par la société CIBA GEIGY.

Les propriétés mécaniques en flexion présentées par ces plaques sont mesurées selon la norme ISO 178 avant vieillissement et après immersion de ces plaques dans l'eau à 98°C pendant 24 heures (vieillissement accéléré). La contrainte à la rupture en flexion, pour un taux de verre ramené à 100 % est de 1120 MPa (écart-type de 122 MPa sur 10 plaques) avant vieillissement et de 186 MPa (écart-type de 20 MPa) après vieillissement.

### EXEMPLE 1

On procède de la même manière que dans l'exemple comparatif 1 en remplaçant le gamma méthacryloxy propyltriméthoxy silane par le 1, vinyl benzyl - 4, méthylamino - éthylamino propyl triméthoxy silane (ajouté sous forme d'un chlorhydrate en solution dans du méthanol, cette solution étant commercialisée sous la référence « Silane Z-6032 » par la société DOW CORNING).

La contrainte de rupture à la flexion, pour un taux de verre ramené à 100 % est de 2111 MPa (écart-type de 159 MPa sur 10 plaques) avant vieillissement et de 616 MPa (écart-type de 26 MPa) après vieillissement.

On observe que l'utilisation de fils selon l'invention permet une amélioration considérable de la résistance à la flexion des composites réalisés à partir des fils et d'une matière organique. La résistance au vieillissement en milieu humide est également améliorée, la perte de propriétés mécaniques après 7 jours de vieillissement accéléré en milieu humide étant beaucoup plus faible que la perte observée en utilisant des fils revêtus d'un silane ne répondant pas à la définition de l'invention.

### EXEMPLE 2

Des enroulements de fils de verre alcali-résistant sont réalisés de la même façon que dans l'exemple comparatif 1 en remplaçant la composition d'ensimage utilisée dans cet exemple comparatif par une composition d'ensimage comprenant 0,08% en poids de 1, vinyl benzyl - 4, méthylamino - éthylamino propyl triméthoxy silane (ajouté sous forme d'un chlorhydrate en solution dans du méthanol), 0,25 % en poids de (N benzylaminoéthyl) amino propyl triméthoxy silane (ajouté sous forme d'un chlorhydrate en solution dans du méthanol, cette solution étant commercialisée sous la référence « Silquest A 1128 » par la société OSi), 1,80 % en poids d'agent collant adipate de diéthylène glycol commercialisé sous la référence « Naxol 2500 SH » par la société SCOTT BADER, 0,42 % en poids d'agent lubrifiant et émulsifiant polyéthylène glycol commercialisé sous la référence « BREOX 2000 » par la société B.P. CHEMICALS, le complément étant essentiellement de l'eau. L'extrait sec est de 2,6 % environ en poids de la composition.

Les fils sont ensuite extraits des enroulements pour réaliser des plaques à fils parallèles conformément à la norme NF 57-152. La résine renforcée est la résine vinylester Derakane 411-45 commercialisée sous cette référence par la société DOW CHEMICALS à laquelle on ajoute, pour 100 parts en poids de résine vinylester, 0,75 parts en poids d'un catalyseur commercialisé sous la référence « Trigonox 239 » par la société AKZO et 0,08 % en poids d'un accélérateur commercialisé sous la référence « NL 51P » par la société AKZO.

Les propriétés mécaniques en flexion présentées par ces plaques sont mesurées selon la norme ISO 178 après avoir fait subir aux échantillons une déformation imposée en flexion en milieu corrosif liquide à 40°C pendant des durées de 3 à 7 jours. Les contraintes à la rupture en flexion (exprimées en MPa), pour un taux de verre ramené à 100 %, mesurées après ces essais de «corrosion sous contrainte » respectivement dans une solution d'acide sulfurique à 1 N, dans une solution de soude à 1 N, dans de l'eau distillée et dans une solution salée à 37 g de sel NaCI par litre, sont reportées dans le tableau I en annexe, les écarts-types sur 6 éprouvettes étant indiqués entre parenthèses.

### EXEMPLE 3

On procède de la même manière que dans l'exemple 2 en modifiant cette fois dans la composition d'ensimage utilisée le taux de 1, vinyl benzyl - 4, méthylamino - éthylamino propyl triméthoxy silane (il représente alors 0,2 % en poids de la composition) et le taux de (N benzylaminoéthyl) amino propyl triméthoxy silane (il représente alors 0,1 % en poids de la composition).

Les résultats sont rapportés dans le tableau I.

On observe une amélioration de la résistance à la flexion des composites après 3 et 7 jours de vieillissement accéléré en milieu corrosif quel que soit le milieu lorsque l'on augmente le taux de silane selon l'invention dans la composition revêtant les fils utilisés.

### EXEMPLE 4

On procède de la même manière que dans l'exemple 2 en utilisant cette fois des fils de verre obtenus à partir d'un verre E de composition suivante, exprimée en pourcentages pondéraux :

| | |
|---|---|
| SiO₂ | 55 % |
| Al₂O₃ | 15 % |
| B₂O₃ | 7 % |
| MgO | 3 % |
| CaO | 19 % |
| Na₂O | 0,3 % |
| K₂O | 0,2 % |
| Fe₂O₃ | 0,3 % |
| Fluor | 0,3 % |

Les résultats sont rapportés dans le tableau I.

### EXEMPLE 5

On procède de la même manière que dans l'exemple 3 en utilisant cette fois des fils de verre obtenus à partir du verre E dont la composition est donnée dans l'exemple 4. Les résultats sont rapportés dans le tableau I.

On observe une amélioration de la résistance à la flexion des composites après 3 à 7 jours de vieillissement accéléré dans l'eau distillée ou dans une solution salée, lorsque l'on augmente le taux de silane selon l'invention dans la composition revêtant les fils utilisés.

### EXEMPLE 6

On procède de la même manière que dans l'exemple 2 en utilisant cette fois des fils de verre obtenus à partir d'un verre R de composition suivante, exprimée en pourcentages pondéraux :

| | |
|---|---|
| SiO₂ | 60 % |
| AI₂O₃ | 25 % |
| MgO | 6 % |
| CaO | 9 % |

Les résultats sont rapportés dans le tableau I.

### EXEMPLE 7

On procède de la même manière que dans l'exemple 3 en utilisant cette fois des fils de verre obtenus à partir du verre R dont la composition est donnée dans l'exemple 6.

Les résultats sont rapportés dans le tableau I.

On observe une amélioration de la résistance à la flexion des composites après 3 jours de vieillissement accéléré en milieu corrosif, quel que soit le milieu, et après 7 jours de vieillissement accéléré en milieu acide ou en milieu basique. L'utilisation des fils selon l'invention permet ainsi de retarder la dégradation des fils et composites en milieu corrosif.

### EXEMPLE 8

On procède de la même manière que dans l'exemple 2 en remplaçant la composition d'ensimage utilisée dans cet exemple par une composition d'ensimage comprenant 0,5 % en poids de 1, vinyl benzyl - 4, méthylamino - éthylamino propyl triméthoxy silane (ajouté sous forme d'un chlorhydrate); 0,1 % en poids de polyazamide silane commercialisé sous la référence « Silquest A 1387 » par la société OSI ; 3,3 % en poids d'agent collant polyester commercialisé sous la référence « Naxol 2500 SH » par la société SCOTT BADER ; et 0,6 % en poids d'agent lubrifiant polyéthylène glycol commercialisé sous la référence « Breox 2000 » par la société B.P. CHEMICALS, le complément étant essentiellement de l'eau. L'extrait sec est de 4,5 % en poids.

Les propriétés mécaniques en flexion des plaques réalisées de la même façon que dans l'exemple 2 sont mesurées selon la norme ISO 178 avant vieillissement et après avoir fait subir aux échantillons une déformation imposée en flexion en milieu corrosif liquide à 40°C pendant 7 jours. Les contraintes à la rupture en flexion (exprimées en MPa), pour un taux de verre ramené à 100 %, mesurées après ces essais de corrosion sous contrainte respectivement dans une solution d'acide sulfurique à 1N et dans une solution de soude à 1N sont rapportées dans le tableau II en annexe.

### EXEMPLE 9

On procède de la même manière que dans l'exemple 8 en remplaçant, dans la composition d'ensimage utilisée, l'agent collant polyester par un agent collant époxy commercialisé sous la référence « EPI-REZ 3510 W 60 » par la société SHELL.

Les résultats sont rapportés dans le tableau II.

On observe que l'utilisation combinée d'un silane selon l'invention et d'un agent collant à fonctions époxy dans la composition revêtant les fils selon l'invention permet d'obtenir des résultats étonnamment élevés en matière de propriétés mécaniques, avant et après 7 jours de vieillissement en milieu corrosif, pour les composites obtenus à partir de ces fils et d'une matière organique et permet d'obtenir des fils et composites résistant extraordinairement bien à la corrosion.

### EXEMPLE COMPARATIF 2

Des enroulements de fils de verre alcali-résistant sont réalisés de la même façon que dans l'exemple comparatif 1 en remplaçant la composition d'ensimage utilisée dans cet exemple par une composition d'ensimage comprenant 0,25 % en poids de (N benzylaminoéthyl) amino propyl triméthoxy silane (ajouté sous forme d'un chlorhydrate en solution, cette solution étant commercialisée sous la référence « Dynasilan 1161 par la société HULS), 10 % en poids d'agent collant à base de polyvinylacétate de haut poids moléculaire (ajouté sous forme d'une solution commercialisée sous la référence « Vinamul R 84146 » par la société VINAMUL), 2 % en poids d'agent lubrifiant à base de monooléate de sorbitan éthoxylé commercialisé sous la référence « Tween 80 » par la société ICI et d'acide gras commercialisé sous la référence « Lutostat N 68 » par la société SIDOBRE SINNOVA, le complément étant essentiellement de l'eau. L'extrait sec est de 12 % environ en poids.

Les fils sont ensuite extraits des enroulements puis sont emprisonnés dans une pâte de ciment Portland Artificiel de type CPA-CEM I 42,5 (norme NF P15-301) ayant un rapport eau/ciment de 0,4 en veillant à ce qu'une partie du fil dépasse du ciment humide. Le ciment est ensuite durci à température ambiante pendant 1 heure puis dans l'eau pendant 23 heures. La contrainte de rupture à la traction des fils pris dans les blocs de ciment est mesurée sur un dynamomètre INSTRON avant et après vieillissement dans l'eau à 80°C pendant 4 jours. Les résultats (donnés en MPa) sont rapportés dans le tableau Il. La contrainte résiduelle (c'est-à-dire la contrainte après vieillissement, exprimée en pourcentage de la contrainte initiale) est également indiquée.

### EXEMPLE 10

On procède de la même manière que dans l'exemple comparatif 2 en utilisant une composition d'ensimage identique mais dénuée de (N benzylaminoéthyl) amino propyl triméthoxy silane et comprenant en outre du 1, vinyl benzyl - 4, méthylamino - éthylamino propyl triméthoxy silane à des taux de 5 % en poids par rapport à l'extrait sec de la composition et comprenant un taux plus faible de lubrifiant et d'agent collant de façon à présenter le même extrait sec de 12 % en poids.

Les résultats sont rapportés dans le tableau II.

### EXEMPLE 11

On procède de la même manière que dans l'exemple 10 en utilisant une composition d'ensimage identique mais comprenant, à la place de l'agent collant polyvinylacétate et au même taux, un agent collant à base de diglycidyl éther de bisphénol A (commercialisé sous la référence « Néoxil 8294 » par la société DSM ITALIA), cette composition présentant un extrait sec de 12 % en poids.

Les résultats sont rapportés dans le tableau II.

### EXEMPLE 12

On procède de la même manière que dans l'exemple 11 en utilisant une composition d'ensimage identique mais comprenant en outre un acide hydroxy éthane diphosphonique commercialisé sous la référence « Masquol P 210 » par la société PROTEX, à des taux de 18% en poids par rapport à l'extrait sec de la composition et comprenant un taux plus faible de lubrifiant et d'agent collant de façon à présenter le même extrait sec de 12 % en poids.

Les résultats sont rapportés dans le tableau II.

On observe une amélioration de la résistance à la traction des fils avant et après 4 jours de vieillissement accéléré lorsque ces fils sont revêtus d'une composition selon l'invention. Cette amélioration est plus importante lorsque la composition comprend également un agent collant à fonction(s) époxy et/ou un acide phosphonique. On observe également que la résistance à la corrosion en milieu alcalin est beaucoup plus importante (perte de propriétés mécaniques plus faible en vieillissement) lorsque la composition comprend, outre au moins un silane selon l'invention, au moins un agent collant à fonction(s) époxy et au moins un acide phosphonique.

Les fils selon l'invention peuvent être utilisés pour réaliser divers composites et notamment pour renforcer directement le ciment (applications : grilles pour façades, etc...) ou pour renforcer indirectement le ciment (applications : substitution de fers à béton par des joncs pultrudés, etc...).

**TABLEAU I**

| | | Exemple 2 | Exemple 3 | Exemple 4 | Exemple 5 | Exemple 6 | Exemple 7 |
|---|---|---|---|---|---|---|---|
| Milieu acide | 3 jours | 810 | 1602 | 1304 | 518 | 1522 | 2001 |
| | | (40) | (172) | (431) | (243) | (402) | (199) |
| | 7 jours | 681 | 834 | 0 | 0 | 1207 | 1508 |
| | | (31) | (65) | | | (255) | (233) |
| Milieu soude | 3 jours | 864 | 1340 | 2129 | 2142 | 1524 | 1642 |
| | | (85) | (108) | (38) | (217) | (372) | (393) |
| | 7 jours | 627 | 657 | 1979 | 1822 | 1325 | 1535 |
| | | (94) | (152) | (118) | (229) | (320) | (251) |
| Milieu eau distillée | 3 jours | 795 | 1536 | 2067 | 2241 | 1530 | 1986 |
| | | (47) | (82) | (220) | (102) | (300) | (139) |
| | 7 jours | 634 | 771 | 1835 | 2144 | 1142 | 1109 |
| | | (37) | (67) | (83) | (151) | (254) | (165) |
| Milieu sel NaCl | 3 jours | 935 | 1670 | 2065 | 2231 | 1512 | 1935 |
| | | (101) | (246) | (133) | (123) | (352) | (315) |
| | 7 jours | 679 | 931 | 2019 | 2235 | 1273 | 1275 |
| | | (51) | (72) | (150) | (119) | (257) | (291) |

**TABLEAU II**

| | | Exemple 8 | Exemple 9 |
|---|---|---|---|
| Milieu acide | avant vieillissement | 2195 | 2275 |
| | 7 jours | 835 | 2230 |
| Milieu soude | avant vieillissement | 2195 | 2275 |
| | 7 jours | 655 | 2125 |

**TABLEAU III**

| | Exemple comparatif 2 | Exemple 10 | Exemple 11 | Exemple 12 |
|---|---|---|---|---|
| Contrainte avant vieillissement (MPa) | 1032 | 1422 | 1830 | 1621 |
| Contrainte après 4 jours (MPa) | 303 | 385 | 640 | 736 |
| Contrainte résiduelle (%) | 29 | 27 | 35 | 45 |

## Revendications

1. Fils de verre destinés au renforcement de matières organiques et/ou inorganiques, ces fils étant revêtus d'une composition d'ensimage comprenant au moins un silane répondant à la formule suivante
Si (R₁) (R₂) (R₃) (R₄)
dans laquelle :
• R₁, R₂ sont des groupements alcoxy,
• R₃ est un groupement alcoxy ou un radical à base uniquement de carbone, d'hydrogène et éventuellement d'azote,
• R₄ est un radical à base uniquement de carbone, d'hydrogène et éventuellement d'azote, comprenant au moins un cycle insaturé substitué par au moins une chaîne insaturée conjuguée avec le cycle,
le taux de silane(s) répondant à la formule précédente étant compris entre 0,5 et 20 % en poids de l'extrait sec de la composition d'ensimage.

2. Fils de verre selon la revendication 1, ***caractérisés en ce que*** la composition comprend en outre au moins un agent collant présentant au moins une fonction époxy.

3. Fils de verre selon la revendication 1 ou 2, *caractérisés en ce qu*'ils sont obtenus à partir d'un verre alcalino-résistant.

4. Fils de verre selon l'une des revendications 1 à 3, ***caractérisés en ce que*** R₄ répond à la formule suivante :
R₅ φ R₆
dans laquelle :
• φ est un cycle benzénique,
• R₆ = -(CH=CH)ₘ-H, m étant un entier compris entre 1 et 4,
• R₅ est une chaîne aliphatique comprenant des groupements alkyls et éventuellement amines, le nombre d'atomes dans la chaîne principale étant compris entre 4 et 20,
*et **en ce que*** R₃ est un groupement de type R₄ ou R₅ ou un groupement alkoxy.

5. Fils de verre selon l'une des revendications 1 à 4, ***caractérisés en ce que*** la composition comprend en outre au moins un acide phosphonique ou dérivé d'acide phosphonique.

6. Composite comprenant au moins une matière organique et/ou une matière inorganique et comprenant des fils de verre, une partie au moins de ces fils étant des fils de verre selon l'une des revendications 1 à 5.

7. Composite selon la revendication 6, *caractérisée en ce qu*'il comprend au moins une matière cimentaire.

## Patentansprüche

1. Glasfasern für die Verstärkung organischer und/oder anorganischer Werkstoffe, wobei diese Fasern mit einem Schlichtengemisch beschichtet sind, das mindestens ein Silan der folgenden Formel enthält:
Si(R₁)(R₂)(R₃)(R₄)
in der
• R₁, R₂ Alkoxy-Gruppen sind,
• R₃ eine Alkoxy-Gruppe oder ein Radikal, ausschließlich bestehend aus Kohlenstoff, Wasserstoff und gegebenenfalls Stickstoff,
• R₄ ein Radikal, ausschließlich bestehend aus Kohlenstoff, Wasserstoff und gegebenenfalls Stickstoff, das mindestens einen ungesättigten Ring enthält, der durch mindestens eine ungesättigte Kette substituiert ist, die mit dem Ring in Konjugation steht,
wobei der Anteil an der vorangehenden Formel entsprechendem/den Silan(en) zwischen 0,5 und 20 Gewichtsprozent der Trockensubstanz des Schlichtengemisches beträgt.

2. Glasfasern nach Patentanspruch 1, **dadurch gekennzeichnet, dass** das Gemisch außerdem mindestens ein Haftmittel enthält, das mindestens eine Epoxy-Gruppe aufweist.

3. Glasfasern nach Patentanspruch 1 oder 2, **dadurch gekennzeichnet, dass** sie aus einem alkalibeständigen Glas gefertigt sind.

4. Glasfasern nach einem der Patentansprüche 1 bis 3, **dadurch gekennzeichnet, dass** R₄ der folgenden Formel entspricht:
R₅ φ R₆
in der
• φ ein Benzolring ist,
• R₆ = -(CH=CH)ₘH, wobei m eine ganze Zahl zwischen 1 und 4 ist,
• R₅ eine aliphatische Kette, die Alkyl- und eventuell Aminogruppen enthält, wobei die Anzahl der Kohlenstoffatome in der Hauptkette zwischen 4 und 20 beträgt,
und dadurch, dass R₃ eine Gruppe vom Typ R₄ oder R₅ oder eine Alkoxy-Gruppe ist.

5. Glasfasern nach einem der Patentansprüche 1 bis 4, **dadurch gekennzeichnet, dass** das Gemisch außerdem mindestens eine Phosphonsäure oder ein Phosphonsäurederivat enthält.

6. Verbundwerkstoff, der mindestens einen organischen Werkstoff und/oder einen anorganischen Werkstoff enthält und Glasfasern, von denen mindestens ein Teil Glasfasern nach einem der Patentansprüche 1 bis 5 sind.

7. Verbundwerkstoff nach Patentanspruch 6, **dadurch gekennzeichnet, dass** er mindestens einen zementartigen Stoff enthält.

## Claims

1. Glass fibres for reinforcing organic and/or inorganic materials, the fibres being coated with a sizing composition comprising at least one silane corresponding to the following formula
Si (R₁) (R₂) (R₃) (R₄)
wherein:
• R₁, R₂ are alkoxy groups,
• R₃ is an alkoxy group or a radical based solely on carbon, hydrogen and, if required, nitrogen,
• R₄ is a radical based solely on carbon, hydrogen and, if required, nitrogen, comprising at least one unsaturated ring substituted by at least one unsaturated chain conjugated with the ring,
the proportion of silane(s) corresponding to the preceding formula being between 0.5 and 20 % by weight of the dry extract of the sizing composition.

2. Glass fibres according to claim 1, ***characterized in that*** the composition further comprises at least one adhesive agent having at least one epoxy function.

3. Glass fibres according to claim 1 or 2, ***characterized in that*** they are obtained from an alkaline-resistant glass.

4. Glass fibres according to any one of claims 1 to 3, ***characterised in that*** R₄ corresponds to the following formula:
R₅ φ R₆
wherein:
• φ is a benzene ring,
• R₆ = -(CH=CH)ₘ-H, m being an integer between 1 and 4,
• R₅ is an aliphatic chain comprising alkyl groups and, if required, amine groups, the number of atoms in the main chain being between 4 and 20,
*and **in that*** R₃ is a R₄ or R₅ type group or an alkoxy group.

5. Glass fibres according to any one of claims 1 to 4, ***characterised in that*** the composition further comprises at least one phosphonic acid or derivative of phosphonic acid.

6. A composite comprising at least one organic material and/or one inorganic material and comprising glass fibres, at least part of the fibres being glass fibres according to one of claims 1 to 5.

7. A composite according to claim 6, ***characterised in* that** it comprises at least one material pertaining to cement.
